# EUROPEAN PATENT SPECIFICATION

(11) **EP 4 461 695 B1**
(45) Date of publication and mention of the grant of the patent: **12.08.2026**
(21) Application number: 23855834.0
(22) Date of filing: 25.04.2023
(51) Int. Cl.: B66F 9/065, B62B 3/06, B62B 5/02

(54) **PALLET TRUCK FOR TRANSPORTING FOUR-WAY ENTRY PALLET**
PALETTENWAGEN ZUM TRANSPORT VON FENSTERFÖRMIGEN PALETTEN
TRANSPALETTE POUR TRANSPORTER UNE PALETTE À QUATRE VOIES D'ENTRÉE

(30) Priority: 21.03.2023 CN 202310282230
(43) Date of publication of application: 13.11.2024
(73) Proprietor: Multiway Robotics Technology (Shenzhen) Co., Ltd., Shenzhen, Guangdong 518000 (CN)
(72) Inventor: CHEN, Wencheng, Shenzhen, Guangdong 518000 (CN); LV, Chaoshun, Shenzhen, Guangdong 518000 (CN); KUANG, Zemin, Shenzhen, Guangdong 518000 (CN); WANG, Hongquan, Shenzhen, Guangdong 518000 (CN)
(74) Representative: Neves, Ana
(86) International application number: PCT/CN2023/090669
(87) International publication number: WO 2024/192843

(56) References cited:
- EP-A1- 0 541 094
- EP-B1- 0 541 095
- CN-A- 106 365 072
- CN-A- 111 056 495
- CN-A- 112 390 200
- CN-A- 112 390 200
- CN-A- 112 849 870
- CN-A- 115 159 401
- CN-U- 218 145 698
- DE-A1- 102018 112 568
- DE-U1- 202005 009 591

## Description

The present application claims priority to the Chinese patent application with application number 202310282230.0 filed on March 21, 2023.

### TECHNICAL FIELD

The present application relates to the technical field of forklifts, and in particular to a pallet truck for transporting window-shaped pallets.

### BACKGROUND

Pallet truck is a type of forklift that mainly relies on the fork to be inserted into the hole of the pallet to pick up and transfer the pallet and the load above the pallet. However, when the existing pallet truck is inserted into the pallet hole of the window-shaped pallet, the load-bearing wheel at the bottom of the fork will rub against the bottom of the pallet hole of the window-shaped pallet. Over a long period of time, the window-shaped pallet will be damaged and the service life of the window-shaped pallet will be affected.

A patent application CN112390200 A discloses that a pallet-handling AGV suitable for taking and placing pallets in the shape of a pallet includesa vehicle body and a fork frame. The lower end of the vehicle body is provided with a drivingwheel, and the vehicle body is provided with a driving device for driving the driving wheel totravel and turn. There are load-bearing wheels, the front end of the fork frame is provided with anintermediate support wheel, an inner mast is arranged between the body and the fork frame, andthe fork frame is movablv connected to the inner mast, and the inner mast is movably connected. A lifting device for driving the inner door frame to rise and fall is arranged inside, a connectingmechanism is arranged between the vehicle body and the inner door frame, and a linkagemechanism is provided at the output end of the connecting mechanism to make the inner doolframe rise and fall synchronously with the swing of the bearing wheel.

A patent application CN106365072A discloses that a large tonnage van comprising a front frame, a rear frame, a lifting cylinder, a rockelarm assembly, a pull rod assembly, a front wheel pin shaft A swing arm pin shaft and a frontwheel support plate, a battery is arranged in the middle of the rear frame, and a pair of vertical channel guides are symmetrically arranged at the front end of the rear frame, a pair of cars aresymmetrically arranged at the front end of the front frame, The rear end of the front frame and thefront frame are symmetrically provided with a pair of roller mounting plates. Each roller mountingplate is provided with a first roller. The first roller is arranged in the channel guide rail and can rollin the channel guide rail. There are two cylinders, two lifting cylinders are arranged on both sidesof the rear frame, the bottom of the lifting cylinder is fixed on the rear frame, the upper end of thepiston rod of the lifting cylinder is fixed on the front frame; The seat plate is hinged on the frontend of the vehicle leg through a front wheel pin shaft, the rocker arm assembly is hinged on therear end of the vehicle leg through a swing arm pin shaft, two ends of the pull rod assembly arerespectively connected with the rocker arm assembly and the front wheel bearing plate Articulatedconnection; the rear end of the rocker arm assembly is provided with a pair of second rollers, therear frame The second roller is provided above the platen roller, channel rails located on the real right side of the frame is provided with limit micro switch, it is provided on the front frame stoptablet.

A patent application CN111056495A discloses that a large-tonnage transfer car, comprising a main frame and a fork assembly. A pump station, drive wheels, and drive assemblies are installed at the middle portion of the main frame. A fixed plate is mounted between the drive assemblies and the drive wheels, with the drive assemblies being arranged on the fixed plate. The drive wheels are mounted on the main frame via the fixed plate. A lifting cylinder device connected to the pump station is installed between the main frame and the fork assembly. A booster cylinder device is additionally mounted on the main frame between the main frame and the fixed plate. The lifting cylinder device and the booster cylinder device are interconnected through pipelines. The car can automatically adjust the downward pressure of the drive wheels based on the weight of transported materials, featuring wide application range, reduced energy consumption, and low usage cost.

A patent application EP0541094A1 discloses that a forklift truck having a drive component, having a load component which is guided on the drive component and can be moved vertically in relation to the drive component by means of two parallel lifting cylinders and which has a load carrier which is arranged at a fixed angle to the relative direction of movement and has, on its underside, load rollers on swivellable axle forks. The forklift truck also has a height control device which swivels, as a function of the relative movement between the drive component and load component, the axle forks accompanied by a variation of the distance between load rollers and load carrier via a linkage. Finally, control cylinders which act on the linkage are provided, the said control cylinders permitting swivelling of the axle forks independently of the relative movement. With the aim of designing the forklift truck to be as compact and as simple as possible, there is provision according to the invention for in each case one lifting cylinder and one control cylinder to be seated on a common piston rod.

A patent EP0541095B1 discloses that A forklift truck having a drive component and having a load component is disclosed, in which the load component can be moved vertically in relation to the drive component by means of two hydraulic cylinders. Between the drive component and the load component an intermediate frame is provided, in relation to which the drive component and the load component can be moved independently of one another in the vertical direction.

### SUMMARY OF THE APPLICATION

The main purpose of the present application is to provide a pallet truck for transporting window-shaped pallets, aiming to solve the problem that when the existing pallet truck is inserted into the window-shaped pallet hole, it easily rubs against the bottom of the window-shaped pallet insertion hole.

In order to achieve the above purpose, the pallet truck for transporting window-shaped pallets proposed by the present application comprises:
- a forklift body;
- a fork arm assembly, which is movably arranged on the forklift body, wherein the fork arm assembly has a movement stroke that moves up and down relative to the forklift body, and the fork arm assembly comprises two fork arms spaced apart along a width direction of the forklift body; and
- two load-bearing wheels, which are movably arranged on each fork arm respectively, wherein in an up and down direction, the load-bearing wheels have a movement stroke close to and away from the fork arm;
- the pallet truck for transporting window-shaped pallets also comprises a second driving assembly, the second driving assembly comprises:
   - a driving part for driving the load-bearing wheels closer to and away from the fork arm in an up and down direction;
   - the second driving assembly comprises:
      - a driving part, the driving part comprises a second fixing part and a second telescopic part that can move relatively up and down, and the second fixing part is fixed on the forklift body;
      - a transmission structure, which is movably arranged at bottom of the fork arm, wherein the transmission structure comprises a driving end and a connecting end spaced apart from each other, the driving end is configured to drively connect with the second fixing part; and
      - a load-bearing wheel frame, which is rotatably connected to the connecting end of the transmission structure, and the load-bearing wheel is rotatably mounted on the load-bearing wheel frame.
      - the transmission structure comprises:
         - a lifting arm, which is hingedly connected to the fork arm, and the connecting end is formed on the lifting arm;
         - a connecting arm, which is hingedly connected to the fork arm, and spaced apart from the lifting arm along a length direction of the fork arm;
         - a pushing rod, one end of which is fixedly connected to a side of the lifting arm away from the load-bearing wheel, and another end is connected to the connecting arm; and
         - a traction block, which is movably arranged on the forklift body in an up and down direction, wherein one end of the traction block is rotationally connected to the pushing rod, and the driving end is formed on a side of the traction block away from the pushing rod;
         - wherein further comprising a second guiding assembly (7) to provide guidance for movement of the traction block (626);
         - the second guiding assembly (7) comprises:
            - two second guiding blocks (71), which are arranged on the forklift body (1) at intervals along the width direction of the forklift body (1), and second guiding grooves extending up and down are formed on an opposite sides of each of the second guiding blocks; and
            - two second guiding wheel sets (72), corresponding to the second guiding grooves, and are rotatably arranged on opposite sides of the traction block (624), and the traction block (624) is clamped in the second guiding groove through the second guiding wheel set (72).

In one embodiment, the fork arm assembly further comprises a sliding plate, the sliding plate is movably arranged on the forklift body, and the fork arms are arranged on the sliding plate;
- the pallet truck for transporting window-shaped pallets further comprises a first driving assembly, the first driving assembly comprises a first fixing part and a first telescopic part that can move relatively up and down, and the first fixing part is fixed on the forklift body, the first telescopic part is fixedly connected to the sliding plate.

In one embodiment, the first driving assembly comprises a first hydraulic cylinder, the first fixing part comprises a cylinder seat of the first hydraulic cylinder, and the first telescopic part comprises a telescopic rod of the first hydraulic cylinder.

In one embodiment, the pallet truck for transporting window-shaped pallets further comprises a first guiding assembly to provide guidance for the sliding plate to move up and down along the forklift body.

In one embodiment, the pallet truck for transporting window-shaped pallets also comprises two first guiding blocks arranged at intervals along the forklift body, and a first guiding groove is formed on the opposite side of each first guiding block that penetrates up and down;
- the pallet truck for transporting window-shaped pallets also comprises two first pulley mounting plates, wherein the two first pulley mounting plates are arranged along a width direction of the sliding plate at intervals where the sliding plate is away from the fork arm, wherein a first guiding wheel set adapted to the first guiding groove is provided on the opposite side of the first pulley mounting plate, and the first guiding wheel set is clamped in the first guiding groove;
- the first guiding assembly comprises the first guiding groove and the first guiding wheel set.

In one embodiment, the driving part comprises a second hydraulic cylinder, the second fixing part comprises a cylinder seat of the second hydraulic cylinder, and the second telescopic part comprises a telescopic rod of the second hydraulic cylinder.

### Beneficial Effects

In the technical solution of the present application, a fork arm assembly that can move up and down is movable on the forklift body. The fork arm assembly comprises fork arms. A load-bearing wheel is provided at the bottom of the fork arm, and the load-bearing wheel has a movement stroke close to and away from the fork arm. During actual operation, when the fork arms extend into the pallet holes of the window-shaped pallet, the load-bearing wheels retract toward the bottom of the fork arms to avoid friction with the bottom of the pallet. When the fork arm is inserted into the designated position, the load-bearing wheel moves away from the fork arm and contacts the ground again through the gap at the bottom of the window-shaped pallet.

### BRIEF DESCRIPTION OF THE DRAWINGS

In order to more clearly explain the embodiments of the present application or the technical solutions in the prior art, the drawings needed to be used in the description of the embodiments or the prior art will be briefly introduced below. Obviously, the drawings in the following description are only some embodiments of the present application. For those of ordinary skill in the art, without exerting creative efforts, other drawings can also be obtained based on the structures shown in these drawings.
Fig.1 is a schematic structural diagram of an embodiment of a pallet truck for transporting Window-shaped pallets provided by the present application;
Fig. 2 is a schematic three-dimensional structural diagram of the forklift body in Fig. 1 with the outer shell removed;
Fig. 3 is a schematic three-dimensional structural diagram of the fork arm assembly in Fig. 1;
Fig. 4 is a schematic three-dimensional structural diagram of the second driving assembly in Fig 1;
Fig. 5 is a schematic three-dimensional structural diagram of the transmission structure in Fig. 4;
Fig. 6 is an exploded view of Fig. 5;
Fig. 7 is a schematic three-dimensional structural diagram of the window-shaped pallet.

**Reference signs:**

| | | | |
|---|---|---|---|
| 10000 | Pallet truck for transporting window-shaped pallets | 6211 | Hinged end of the wheel arm |
| 1 | Forklift body | 6212 | Hinged end of the rod arm |
| 2 | Fork arm assembly | 6213 | Hinged end of the lifting arm |
| 21 | sliding plate | 622 | Connecting arm |
| 211 | Driving plate | 6221 | Hinged end of the connecting arm |
| 22 | Fork arm | 6222 | Hinged end of the arm rod |
| 3 | Load-bearing wheel | 6223 | Driving end of the connecting arm |
| 4 | First driving assembly | 624 | Traction block |
| 4a | First hydraulic cylinder | 63 | Loading-bearing wheel frame |
| 5 | First guiding assembly | 7 | Second guiding assembly |
| 51 | First guiding groove | 71 | Second guiding groove |
| 52 | First guiding wheel set | 72 | Second guiding wheel set |
| 6 | Second drive component | 8 | Window-shaped pallet |
| 61 | Drive department | 81 | Pallet hole |
| 61a | Second hydraulic cylinder | 82 | pallet bottom |
| 62 | Transmission structure | 83 | Gap at the bottom |
| 621 | Lifting arm | | |

The realization of the purpose, functional features and advantages of the present application will be further described with reference to the embodiments and the accompanying drawings.

### DETAILED DESCRIPTION

The technical solutions in the embodiments of the present application will be clearly and completely described below in conjunction with the accompanying drawings in the embodiments of the present application. Obviously, the described embodiments are only some of the embodiments of the present application, but not all of the embodiments.

It should be noted that all directional indications (such as up, down, left, right, front, back...) in the embodiments of the present application are only used to explain the relationship between components in a specific posture (as shown in the drawings), relative positional relationship, movement conditions, etc., if the specific posture changes, the directional indication will also change accordingly.

In addition, descriptions involving "first", "second", etc. in this application are for descriptive purposes only and cannot be understood as indicating or implying their relative importance or implicitly indicating the number of indicated technical features. Therefore, features defined as "first" and "second" may explicitly or implicitly include at least one of these features. In addition, the technical solutions in the various embodiments can be combined with each other, but they must be based on what a person of ordinary skill in the art can implement. When the combination of technical solutions appears to be contradictory or cannot be realized, it should be deemed that such combination of technical solutions does not exist and is not within the protection scope claimed by this application.

Pallet truck is a type of forklift that mainly relies on the fork to be inserted into the hole of the pallet to pick up and transfer the pallet and the load above the pallet. However, when the existing pallet trucks transporting window-shaped pallets are inserted into the pallet holes of the window-shaped pallets, the load-bearing wheels at the bottom of the forks will rub against the bottom of the pallet holes of the window-shaped pallets. Over a long period of time, the window-shaped pallet will be damaged and the service life of the window-shaped pallet will be affected.

In order to achieve the above purpose, the present application proposes a pallet truck for transporting window-shaped pallets, aiming to solve the problem that when the existing pallet truck is inserted into the window-shaped pallet hole, it easily rubs against the bottom of the window-shaped pallet insertion hole.

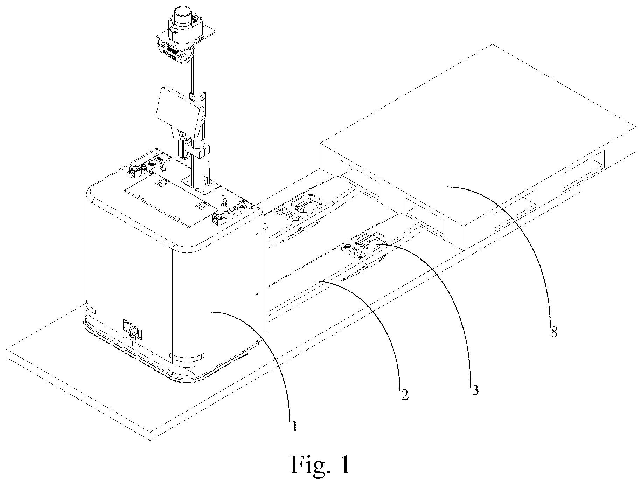

Please refer to Fig. 1, the pallet truck for transporting window-shaped pallets 10000 comprises: a forklift body1; a fork arm assembly 2 and two load-bearing wheels 3. The fork arm assembly 2 is movably arranged on the forklift body 1, wherein the fork arm assembly 2 has a movement stroke that moves up and down relative to the forklift body 1, and the fork arm assembly 2 comprises two fork arms 22 spaced apart along a width direction of the forklift body 1; and the two load-bearing wheels 3 are movably arranged on each fork arm 22 respectively, wherein in an up and down direction, the load-bearing wheels 3 have a movement stroke close to and away from the fork arm 22.

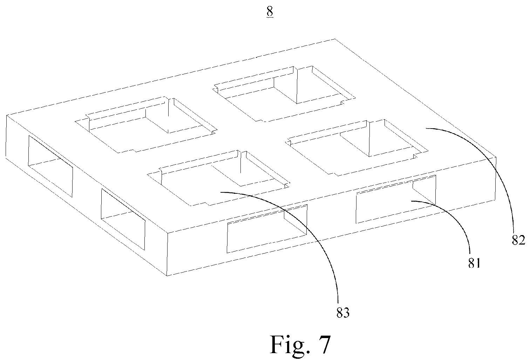

In the technical solution of the present application, the forklift body 1 is movable with a fork arm assembly 2 that can move up and down. The fork arm assembly 2 comprises fork arms 22. The bottom of the fork arm 22 is provided with a load-bearing wheel 3. The load-bearing wheel 3 has a movement stroke close to and away from the fork arm 22. During actual operation, please refer to Fig. 1 and 7, when the fork arms 22 extend into the pallet holes 81 of the window-shaped pallet 8, the load-bearing wheels 3 retract toward the bottom of the fork arms 22 to avoid friction with the pallet bottom 82 . When the fork arm 22 is inserted into the designated position, the load-bearing wheel 3 moves away from the fork arm 22 and contacts the ground again through the gap 83 at the bottom of the window-shaped pallet 8.

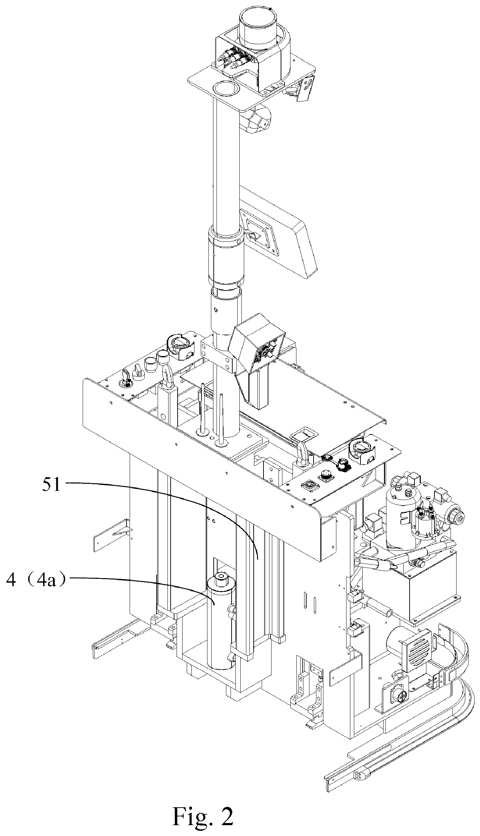

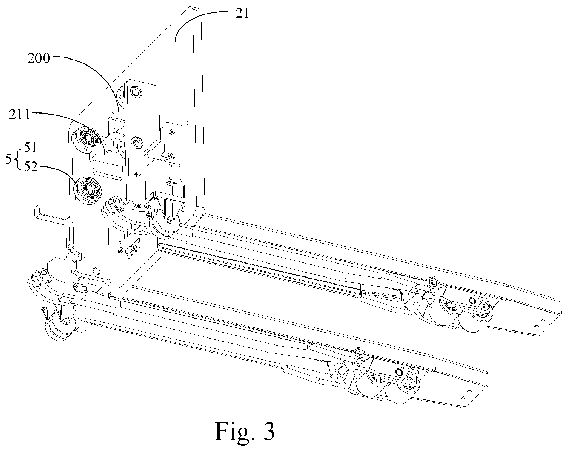

In order to drive the fork arm 22 to move up and down, please refer to Fig. 2 and 3, in an embodiment of the present application, the fork arm assembly 2 also comprises a sliding plate 21, the sliding plate 21 is movably arranged on the forklift body 1, and the fork arms 22 are arranged on the sliding plate 21. The pallet truck for transporting window-shaped pallets 8 further comprises a first driving assembly 4, the first driving assembly 4 comprises a first fixing part and a first telescopic part that can move relatively up and down, and the first fixing part is fixed on the forklift body 1, the first telescopic part is fixedly connected to a driving plate 211 of the sliding plate 21. In this way, the fork arm 22 is driven to move up and down. Further, the first driving assembly 4 may be a driving cylinder or a driving oil cylinder, which is not limited in the present application. In yet another embodiment of the present application, the first driving assembly 4 comprises a first hydraulic cylinder 4a, the first fixing part comprises a cylinder seat of the first hydraulic cylinder 4a, and the first telescopic part comprises a telescopic rod of the first hydraulic cylinder 4a.

In order to ensure the smooth operation of the fork arm 22, please refer to Fig. 2 and 3, the pallet truck for transporting window-shaped pallets 8 provided in the present application also comprises a first guiding assembly 5 to provide guidance for the sliding plate 21 to move up and down along the forklift body 1. The first guiding assembly 5 can be a guiding rail and a sliding block that cooperate with each other, or it can be a guiding rod and a guiding hole, which is not limited in the present application. In one embodiment of the present application, the pallet truck for transporting window-shaped pallets 8 further comprises two first guiding blocks arranged at intervals along the forklift body 1, and a first guiding groove 51 is formed on the opposite side of each first guiding block that penetrates up and down. The pallet truck for transporting window-shaped pallets 8 also comprises two first pulley mounting plates, wherein the two first pulley mounting plates are arranged along a width direction of the sliding plate 21 at intervals where the sliding plate 21 is away from the fork arm 22, wherein a first guiding wheel set 52 adapted to the first guiding groove 51 is provided on the opposite side of the first pulley mounting plate, and the first guiding wheel set 52 is clamped in the first guiding groove 51 and can slide up and down along the guiding groove. In this way, a guide is provided for the movement of the sliding plate 21, thereby ensuring the stability of the movement of the fork arm 22.

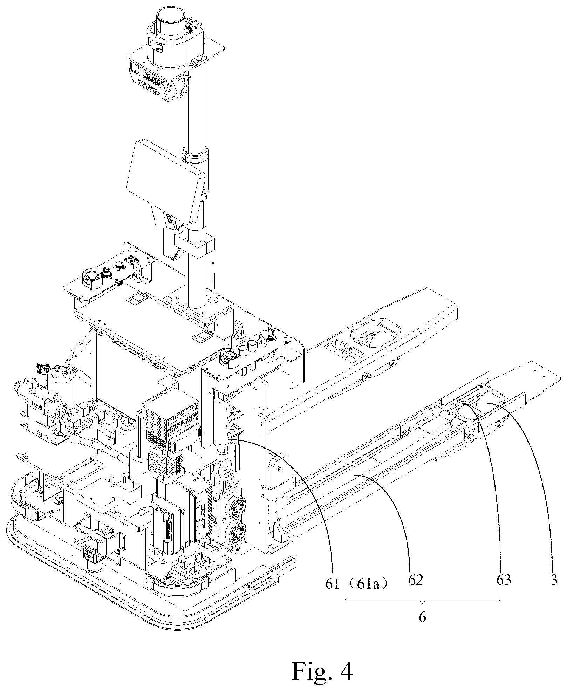

In order to drive the c load-bearing wheels 3 to move, please refer to Fig. 4 to 6, in one embodiment of the present application, the pallet truck for transporting window-shaped pallets 8 further comprising a second driving assembly 6, the second driving assembly 6 comprises a driving part 61 for driving the load-bearing wheels 3 closer to and away from the fork arm 22 in an up and down direction. The second driving assembly 6 comprises: a driving part 61, a transmission structure 62 and a load-bearing wheel frame 63. The driving part 61 comprises a second fixing part and a second telescopic part that can move relatively up and down, and the second fixing part is fixed on the forklift body 1. The transmission structure 62 is movably arranged at bottom of the fork arm 22, wherein the transmission structure 63comprises a driving end and a connecting end spaced apart from each other, the driving end is configured to drively connect with the second fixing part. The load-bearing wheel frame 63 is rotatably connected to the connecting end of the transmission structure, and the load-bearing wheel 3 is rotatably mounted on the load-bearing wheel frame 63. In actual operation, the driving member can drive the transmission structure to move, thereby driving the load-bearing wheel frame 63 to move, and finally drive the load-bearing wheel 3 mounted on the load-bearing wheel frame 63 to fold and unfold.

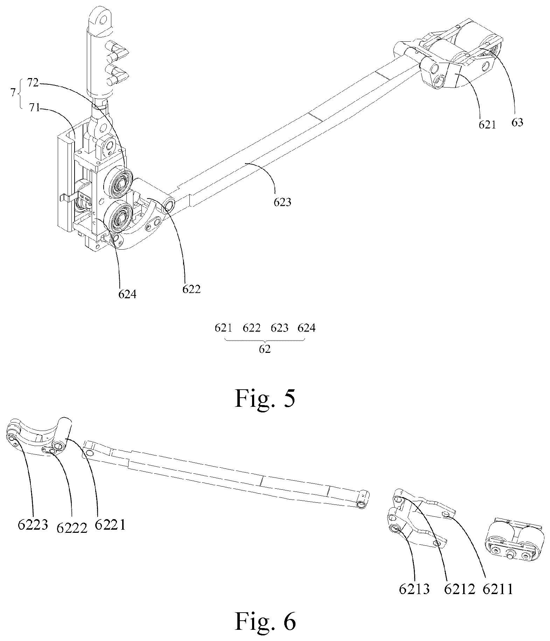

In order to realize the driving of the load-bearing wheel frame 63, please refer to Fig. 5 and 6, the transmission structure 62 comprises a lifting arm 621, a connecting arm 622, a pushing rod 623 and a traction block 624. The lifting arm 621 is hingedly connected to the fork arm 22, and the connecting end is formed on the lifting arm 621. The connecting arm 622 is hingedly connected to the fork arm 22, and spaced apart from the lifting arm 621 along a length direction of the fork arm 22. One end of the pushing rod 623 is fixedly connected to a side of the lifting arm 621 away from the load-bearing wheel 3, and another end is connected to the connecting arm 622. The traction block 624 is movably arranged on the forklift body 1 in an up and down direction, wherein one end of the traction block 624 is rotationally connected to the pushing rod 623, and the driving end is formed on a side of the traction block 624 away from the pushing rod 623. Please refer to Fig. 7 for details, the lifting arm is hingedly connected to the fork arm 22 through a hinged end of the rod arm 6213, is rotatably connected to the pushing rod 623 through the hinged end of the rod arm 6212, and is rotatably connected to the load-bearing wheel through the hinged end of the wheel arm 6211. The connecting arm 622 is hingedly connected to the fork arm 22 through the hinge end of the connecting arm 6221, is rotationally connected to the pushing rod 623 through the hinged end of the arm rod 6222, and is connected to the traction block 624 through the driving end of the connecting arm 6223. In this way, the purpose of realizing the transmission of the load-bearing wheels 3 is achieved.

In order to ensure that the traction block 624 moves smoothly, please refer to Fig. 5, in an embodiment of the present application, the pallet truck for transporting window-shaped pallets 8 further comprises a second guiding assembly 7 to provide guidance for movement of the traction block 624. The second guiding assembly 7 may be a guide rail and a slide block that cooperate with each other, or it may be a guiding rod and a guiding hole, which is not limited in this application. In an embodiment of the present application, the second guiding assembly 7 comprises two second guiding blocks 71 and two second guiding wheel sets 72. Two second guiding blocks are arranged on the forklift body 1 at intervals along the width direction of the forklift body 1, and second guiding grooves extending up and down are formed on an opposite sides of each of the second guiding blocks. Two second guiding wheel sets 72 correspond to the second guiding grooves, and are rotatably arranged on opposite sides of the traction block 624, and the traction block 624 is clamped in the second guiding groove through the second guiding wheel set 72 and can move along the second guiding groove, thus providing guidance for the movement of the traction block 624.

In order to drive the traction block 624 to move, the driving part 61 may be a cylinder or an oil cylinder, which is not limited in this application. In an embodiment of the present application, the driving part 61 comprises a second hydraulic cylinder 61a, the second fixing part comprises a cylinder seat of the second hydraulic cylinder 61a, and the second telescopic part comprises a telescopic rod of the second hydraulic cylinder 61a.

The above are only preferred embodiments of the present application and are not intended to limit the patent scope of the claims.

## Claims

1. A pallet truck for transporting window-shaped pallets (8), comprising:
- a forklift body (1);
- a fork arm assembly (2), which is movably arranged on the forklift body (1), wherein the fork arm assembly (2) has a movement stroke that moves up and down relative to the forklift body (1), and the fork arm assembly (2) comprises two fork arms (22) spaced apart along a width direction of the forklift body (1); and
- two load-bearing wheels (3), which are movably arranged on each fork arm (22) respectively, wherein in an up and down direction, the load-bearing wheels (3) have a movement stroke close to and away from the fork arm (22);
- wherein the pallet truck further comprises a second driving assembly (6), the second driving assembly (6) comprises a driving part (61) for driving the load-bearing wheels (3) closer to and away from the fork arm (22) in an up and down direction;
- the second driving assembly (6) comprises:
- the driving part (61), the driving part (61) comprises a second fixing part and a second telescopic part that can move relatively up and down, and the second fixing part is fixed on the forklift body (1);
- a transmission structure (62), which is movably arranged at bottom of the fork arm (22), wherein the transmission structure (62) comprises a driving end and a connecting end spaced apart from each other, the driving end is configured to drively connect with the second fixing part; and
- the transmission structure (62) comprises:
- a lifting arm (621), which is hingedly connected to the fork arm (22), and the connecting end is formed on the lifting arm (621);
- a connecting arm (622), which is hingedly connected to the fork arm (22), and spaced apart from the lifting arm (621) along a length direction of the fork arm (22);
- a pushing rod (623), one end of which is fixedly connected to a side of the lifting arm (621) away from the load-bearing wheel (3), and another end is connected to the connecting arm; and
- a traction block (624), which is movably arranged on the forklift body (1) in an up and down direction, wherein one end of the traction block (624) is rotationally connected to the pushing rod (623), and the driving end is formed on a side of the traction block (624) away from the pushing rod (623);
- wherein the pallet truck further comprises a second guiding assembly (7) to provide guidance for movement of the traction block (626);
and **characterised in that**,
- the second driving assembly (6) also comprises a load-bearing wheel frame (63), which is rotatably connected to the connecting end of the transmission structure (62), and the load-bearing wheel (3) is rotatably mounted on the load-bearing wheel frame (63); and
- the second guiding assembly (7) comprises:
- two second guiding blocks (71), which are arranged on the forklift body (1) at intervals along the width direction of the forklift body (1), and second guiding grooves extending up and down are formed on an opposite sides of each of the second guiding blocks (71); and
- two second guiding wheel sets (72), corresponding to the second guiding grooves, and are rotatably arranged on opposite sides of the traction block (624), and the traction block (624) is clamped in the second guiding groove through the second guiding wheel set (72).

2. The pallet truck for transporting window-shaped pallets (8) according to claim 1, wherein the fork arm assembly (2) further comprises a sliding plate (21), the sliding plate (21) is movably arranged on the forklift body (1), and the fork arms (22) are arranged on the sliding plate (21);
- the pallet truck for transporting window-shaped pallets (8) further comprises a first driving assembly (4), the first driving assembly (4) comprises a first fixing part and a first telescopic part that can move relatively up and down, and the first fixing part is fixed on the forklift body (1), the first telescopic part is fixedly connected to the sliding plate (21).

3. The pallet truck for transporting window-shaped pallets (8) according to claim 2, wherein the first driving assembly (4) comprises a first hydraulic cylinder (4a), the first fixing part comprises a cylinder seat of the first hydraulic cylinder (4a), and the first telescopic part comprises a telescopic rod of the first hydraulic cylinder (4a).

4. The pallet truck for transporting window-shaped pallets (8) according to claim 2, further comprising a first guiding assembly (5) to provide guidance for the sliding plate (21) to move up and down along the forklift body (1).

5. The pallet truck for transporting window-shaped pallets (8) according to claim 4, wherein the pallet truck for transporting window-shaped pallets (8) also comprises two first guiding blocks arranged at intervals along the forklift body (1), and a first guiding groove (51) is formed on the opposite side of each first guiding block that penetrates up and down;
- the pallet truck for transporting window-shaped pallets (8) also comprises two first pulley mounting plates, wherein the two first pulley mounting plates are arranged along a width direction of the sliding plate (21) at intervals where the sliding plate (21) is away from the fork arm (22), wherein a first guiding wheel set (52) adapted to the first guiding groove (51) is provided on the opposite side of the first pulley mounting plate, and the first guiding wheel set (52) is clamped in the first guiding groove (51);
- the first guiding assembly (5) comprises the first guiding groove (51) and the first guiding wheel set (52).

6. The pallet truck for transporting window-shaped pallets (8) according to claim 1, wherein the driving part (61) comprises a second hydraulic cylinder (61a), the second fixing part comprises a cylinder seat of the second hydraulic cylinder (61a), and the second telescopic part comprises a telescopic rod of the second hydraulic cylinder (61a).

## Patentansprüche

1. Palettenwagen zum Transport von fensterförmigen Paletten (8), umfassend:
- einen Gabelstaplerkörper (1);
- eine Gabelarmsbaugruppe (2), die beweglich am Gabelstaplerkörper (1) angeordnet ist, wobei die Gabelarmsbaugruppe (2) einen Bewegungshub aufweist, der sich relativ zum Gabelstaplerkörper (1) auf und ab bewegt, und die Gabelarmsbaugruppe (2) zwei entlang einer Breitenrichtung des Gabelstaplerkörpers (1) beabstandete Gabelarme (22) umfasst; und
- zwei tragende Räder (3), die jeweils beweglich an jedem Gabelarm (22) angeordnet sind, wobei die tragenden Räder (3) in Auf- und Abwärtsrichtung einen Bewegungshub auf den Gabelarm (22) zu und von diesem weg aufweisen,
- ferner umfassend eine zweite Antriebsbaugruppe (6), wobei die zweite Antriebsbaugruppe (6) einen Antriebsteil (61) umfasst, der dazu ausgebildet ist, die tragenden Räder (3) in Auf- und Abwärtsrichtung auf den Gabelarm (22) zu und von diesem weg zu bewegen;
wobei die zweite Antriebsbaugruppe (6) umfasst:
- das Antriebsteil (61), wobei das Antriebsteil (61) einen zweiten Befestigungsteil und einen zweiten Teleskopteil umfasst, die sich relativ zueinander auf und ab bewegen können, und der zweite Befestigungsteil am Gabelstaplerkörper (1) befestigt ist;
- eine Übertragungsstruktur (62), die beweglich am Boden des Gabelarms (22) angeordnet ist, wobei die Übertragungsstruktur (62) ein Antriebsende und ein davon beabstandetes Verbindungsende umfasst, wobei das Antriebsende dazu ausgebildet ist, mit dem zweiten Befestigungsteil in Antriebsverbindung zu stehen; und
- wobei die Übertragungsstruktur (62) umfasst:
- einen Hubarm (621), der gelenkig mit dem Gabelarm (22) verbunden ist und an dem das Verbindungsende ausgebildet ist;
- ein Verbindungsarm (622), der gelenkig mit dem Gabelarm (22) verbunden ist und entlang der Längsrichtung des Gabelarms (22) vom Hubarm (621) beabstandet ist;
- eine Schubstange (623), deren ein Ende fest mit einer vom tragenden Rad (3) abgewandten Seite des Hubarms (621) verbunden ist und deren anderes Ende mit dem Verbindungsarm verbunden ist; und
- ein Zugblock (624), der beweglich am Gabelstaplerkörper (1) in Auf- und Abwärtsrichtung angeordnet ist, wobei ein Ende des Zugblocks (624) drehbar mit der Schubstange (623) verbunden ist und das Antriebsende auf einer dem Schubstange (623) abgewandten Seite des Zugblocks (624) ausgebildet ist;
- wobei der Palettenwagen ferner eine zweite Führungsbaugruppe (7) umfasst, um die Bewegungsführung des Zugblocks (624) bereitzustellen,
und **dadurch gekennzeichnet, dass**
- die zweite Antriebsbaugruppe (6) ferner einen tragenden Radrahmen (63) umfasst, der drehbar mit dem Verbindungsende der Übertragungsstruktur (62) verbunden ist, und das tragende Rad (3) drehbar an dem tragenden Radrahmen (63) montiert ist; und
- die zweite Führungsbaugruppe (7) umfasst:
- zwei zweite Führungsblöcke (71), die entlang der Breitenrichtung des Gabelstaplerkörpers (1) beabstandet angeordnet sind, wobei an gegenüberliegenden Seiten jedes der zweiten Führungsblöcke (71) sich nach oben und unten erstreckende zweite Führungsnuten ausgebildet sind; und
- zwei zweite Führungsrollensätze (72), die den zweiten Führungsnuten entsprechen und drehbar an gegenüberliegenden Seiten des Zugblocks (624) angeordnet sind, wobei der Zugblock (624) durch den zweiten Führungsrollensatz (72) in der zweiten Führungsnut geklemmt ist.

2. Palettenwagen zum Transport von fensterförmigen Paletten (8) nach Anspruch 1, wobei die Gabelarmsbaugruppe (2) weiterhin eine Gleitplatte (21) umfasst, wobei die Gleitplatte (21) beweglich am Gabelstaplerkörper (1) angeordnet ist und die Gabelarme (22) auf der Gleitplatte (21) angeordnet sind;
- der Palettenwagen zum Transport von fensterförmigen Paletten (8) ferner eine erste Antriebsbaugruppe (4) umfasst, wobei die erste Antriebsbaugruppe (4) ein erstes Befestigungsteil und ein erstes Teleskopteil umfasst, die sich relativ zueinander auf und ab bewegen können, und wobei das erste Befestigungsteil am Gabelstaplerkörper (1) befestigt ist und das erste Teleskopteil fest mit der Gleitplatte (21) verbunden ist.

3. Palettenwagen zum Transport von fensterförmigen Paletten (8) nach Anspruch 2, wobei die erste Antriebsbaugruppe (4) einen ersten Hydraulikzylinder (4a) umfasst, das erste Befestigungsteil einen Zylindersitz des ersten Hydraulikzylinders (4a) umfasst und das erste Teleskopteil eine Teleskopstange des ersten Hydraulikzylinders (4a) umfasst.

4. Palettenwagen zum Transport von fensterförmigen Paletten (8) nach Anspruch 2, umfassend weiter eine erste Führungsbaugruppe (5), um eine Führung für die Gleitplatte (21) zum Auf- und Abbewegen entlang des Gabelstaplerkörpers (1) bereitzustellen.

5. Palettenwagen zum Transport von fensterförmigen Paletten (8) nach Anspruch 4, wobei der Palettenwagen zum Transport von fensterförmigen Paletten weiterhin zwei erste Führungsblöcke umfasst, die in Abständen entlang des Gabelstaplerkörpers (1) angeordnet sind, und eine erste Führungsnut (51) auf der gegenüberliegenden Seite jedes ersten Führungsblocks ausgebildet ist, die sich oben und unten erstreckt,
- der Palettenwagen zum Transport von fensterförmigen Paletten (8) ebenfalls zwei erste Riemenscheiben-Montageplatten umfasst, wobei die zwei ersten Riemenscheiben-Montageplatten entlang einer Breitenrichtung der Gleitplatte (21) in Abständen angeordnet sind, wo die Gleitplatte (21) vom Gabelarm (22) entfernt ist, wobei auf der gegenüberliegenden Seite der ersten Riemenscheiben-Montageplatte ein erster Führungsrollensatz (52) vorgesehen ist, der zur ersten Führungsnut (51) passt, und der erste Führungsrollensatz (52) in der ersten Führungsnut (51) eingeklemmt ist;
- die erste Führungsbaugruppe (5) die erste Führungsnut (51) und den ersten Führungsrollensatz (52) umfasst.

6. Palettenwagen zum Transport von fensterförmigen Paletten (8) nach Anspruch 1, wobei der Antriebsteil (61) einen zweiten Hydraulikzylinder (61a) umfasst, das zweite Befestigungsteil einen Zylindersitz des zweiten Hydraulikzylinders (61a) umfasst und das zweite Teleskopteil eine Teleskopstange des zweiten Hydraulikzylinders (61a) umfasst.

## Revendications

1. Transpalette pour transporter des palettes en forme de fenêtre (8), comprenant :
- un corps de chariot élévateur (1) ;
- un ensemble de bras de fourche (2), qui est disposé de manière mobile sur le corps de chariot élévateur (1), l'ensemble de bras de fourche (2) ayant une course de mouvement vertical par rapport au corps de chariot élévateur (1), et l'ensemble de bras de fourche (2) comprenant deux bras de fourche (22) espacés dans une direction de largeur du corps de chariot élévateur (1) ; et
- deux roues portantes (3), qui sont disposées de manière mobile sur chaque bras de fourche (22) respectivement, dans une direction verticale, les roues portantes (3) ayant une course de mouvement de rapprochement et d'éloignement par rapport au bras de fourche (22) ;
- dans lequel le transpalette comprend en outre un deuxième ensemble d'entraînement (6), le deuxième ensemble d'entraînement (6) comprenant une portion d'entraînement (61) pour entraîner les roues portantes (3) à se rapprocher ou à s'éloigner du bras de fourche (22) dans une direction verticale ;
- le deuxième ensemble d'entraînement (6) comprend :
- la portion d'entraînement (61), la portion d'entraînement (61) comprenant une deuxième portion de fixation et une deuxième portion télescopique configurée pour se déplacer relativement et verticalement, et la deuxième portion de fixation étant fixée sur le corps de chariot élévateur (1) ;
- une structure de transmission (62), qui est disposée de manière mobile au fond du bras de fourche (22), la structure de transmission (62) comprenant une extrémité d'entraînement et une extrémité de connexion espacées l'une de l'autre, l'extrémité d'entraînement étant configurée pour se connecter par entraînement à la deuxième portion de fixation ; et
- la structure de transmission (62) comprend :
- un bras de levage (621), qui est connecté par articulation au bras de fourche (22), l'extrémité de connexion étant formée sur le bras de levage (621) ;
- un bras de connexion (622), qui est connecté par articulation au bras de fourche (22), et est espacé du bras de levage (621) dans une direction de longueur du bras de fourche (22) ;
- une tige de poussée (623), dont une extrémité est connectée de manière fixe à un côté du bras de levage (621) éloigné de la roue portante (3), et l'autre extrémité est connectée au bras de connexion ; et
- un bloc de traction (624), qui est disposé de manière mobile sur le corps de chariot élévateur (1) dans une direction verticale, une extrémité du bloc de traction (624) étant connectée de manière rotative à la tige de poussée (623), et l'extrémité d'entraînement étant formée sur un côté du bloc de traction (624) éloigné de la tige de poussée (623) ;
- dans lequel le transpalette comprend en outre un deuxième ensemble de guidage (7) pour fournir un guidage au mouvement du bloc de traction (626) ;
et **caractérisé en ce que** :
- le deuxième ensemble d'entraînement (6) comprend également un cadre de roue portante (63), qui est connecté de manière rotative à l'extrémité de connexion de la structure de transmission (62), et la roue portante (3) est montée de manière rotative sur le cadre de roue portante (63) ; et
- le deuxième ensemble de guidage (7) comprend :
- deux deuxièmes blocs de guidage (71), qui sont disposés sur le corps de chariot élévateur (1) à intervalles dans la direction de largeur du corps de chariot élévateur (1), des deuxièmes rainures de guidage s'étendant verticalement étant formées sur des côtés opposés de chacun des deuxièmes blocs de guidage (71) ; et
- deux groupes de deuxièmes blocs de guidage (72), qui correspondent aux deuxièmes rainures de guidage,
et sont montés de manière rotative sur des côtés opposés du bloc de traction (624), le bloc de traction (624) étant serré dans la deuxième rainure de guidage par l'intermédiaire du groupe de deuxièmes blocs de guidage (72).

2. Transpalette pour transporter des palettes en forme de fenêtre (8) selon la revendication 1, dans lequel l'ensemble de bras de fourche (2) comprend en outre une plaque coulissante (21), la plaque coulissante (21) étant disposée de manière mobile sur le corps de chariot élévateur (1), et les bras de fourche (22) étant disposés sur la plaque coulissante (21) ;
- le transpalette pour transporter des palettes en forme de fenêtre (8) comprend en outre un premier ensemble d'entraînement (4), le premier ensemble d'entraînement (4) comprenant une première portion de fixation et une première portion télescopique configurée pour se déplacer relativement et verticalement, la première portion de fixation étant fixée sur le corps de chariot élévateur (1), et la première portion télescopique étant connectée de manière fixe à la plaque coulissante (21).

3. Transpalette pour transporter des palettes en forme de fenêtre (8) selon la revendication 2, dans lequel le premier ensemble d'entraînement (4) comprend un premier cylindre hydraulique (4a), la première portion de fixation comprend un siège de cylindre du premier cylindre hydraulique (4a), et la première portion télescopique comprend une tige télescopique du premier cylindre hydraulique (4a).

4. Transpalette pour transporter des palettes en forme de fenêtre (8) selon la revendication 2, comprenant en outre un premier ensemble de guidage (5) pour guider la plaque coulissante (21) à se déplacer verticalement le long du corps de chariot élévateur (1).

5. Transpalette pour transporter des palettes en forme de fenêtre (8) selon la revendication 4, dans lequel le transpalette pour transporter des palettes en forme de fenêtre (8) comprend également deux premiers blocs de guidage disposés à intervalles le long du corps de chariot élévateur (1), et une première rainure de guidage (51) est formée sur le côté opposé de chaque premier bloc de guidage et traverse verticalement ;
- le transpalette pour transporter des palettes en forme de fenêtre (8) comprend également deux premières plaques de montage de poulies, les deux premières plaques de montage de poulies étant disposées à intervalles dans une direction de largeur de la plaque coulissante (21) dans laquelle la plaque coulissante (21) s'éloigne du bras de fourche (22), un premier groupe de roues de guidage (52) adapté à la première rainure de guidage (51) étant prévue sur le côté opposé de la première plaque de montage de poulies, et le premier groupe de roues de guidage (52) étant serré dans la première rainure de guidage (51) ;
- le premier ensemble de guidage (5) comprend la première rainure de guidage (51) et le premier groupe de roues de guidage (52).

6. Transpalette pour transporter des palettes en forme de fenêtre (8) selon la revendication 1, dans lequel la portion d'entraînement (61) comprend un deuxième cylindre hydraulique (61a), la deuxième portion de fixation comprend un siège de cylindre du deuxième cylindre hydraulique (61a), et la deuxième portion télescopique comprend une tige télescopique du deuxième cylindre hydraulique (61a).
